# EUROPEAN PATENT SPECIFICATION

(11) **EP 2 964 421 B1**
(45) Date of publication and mention of the grant of the patent: **28.06.2017**
(21) Application number: 14705215.3
(22) Date of filing: 20.01.2014
(51) Int. Cl.: B23Q 11/00

(54) **MACHINE TOOL WITH BALANCING DEVICE OF THE WORKING HEAD**
WERKZEUGMASCHINE MIT GEWICHTSAUSGLEICHSVORRICHTUNG DES BEARBEITUNGSKOPFES
MACHINE-OUTIL À DISPOSITIF D'ÉQUILIBRAGE DE LA TÊTE DE TRAVAIL

(30) Priority: 06.03.2013 IT BS20130027
(43) Date of publication of application: 13.01.2016
(73) Proprietor: Innse-Berardi S.p.A., 25127 Brescia (IT)
(72) Inventor: CAMOZZI, Giovanni, I-25127 Brescia (IT); VALSECCHI, Natale, I-25127 Brescia (IT); AGOSTI, Dante, I-25127 Brescia (IT)
(74) Representative: Pulieri, Gianluca Antonio
(86) International application number: PCT/IB2014/058412
(87) International publication number: WO 2014/135994

(56) References cited:
- EP-A1- 1 319 465
- EP-A1- 1 880 797
- EP-A1- 1 995 017
- DE-A1- 2 245 866
- JP-A- 2010 091 035

## Description

The present invention relates to a machine tool, in particular, a machine tool of large dimensions, provided with a balancing device of the weight of the support structure of the working head. From EP-A-1 319 465 there is known a machine tool according to the preamble of claim 1.

In the machine tools field, especially those of large dimensions, the need is strongly felt by users to be able to make a mechanical piece with increasingly reduced machine tolerances. Such requirement has repercussions on the manufacturers of such machines, who undertake significant R&D to offer machinery with increasingly improved performance.

The entity of the machine tolerances which can be obtained for a mechanical piece is greatly influenced by the mechanical and thermal deformations undergone by the machine components. In particular, a significant portion of such deformations take place in the support structure of the machining head on account of the weight of the head itself.

The purpose of the present invention is to provide a machine tool which overcomes such drawback.

Such purpose is achieved by a machine tool made according to claim 1. The dependent claims describe embodiment variants.

The characteristics and advantages of the machine tool according to the present invention will be evident from the description given below, by way of a nonlimiting example, according to the appended drawings, wherein:
- figures 1 to 7 show diagrams of different types of machine tools, provided with a balancing device according to the present invention;
- figure 8 shows a diagram of a vertical milling machine fitted with the balancing device according to the present invention;
- figure 9 shows the balancing device according to a preferred embodiment of the present invention.

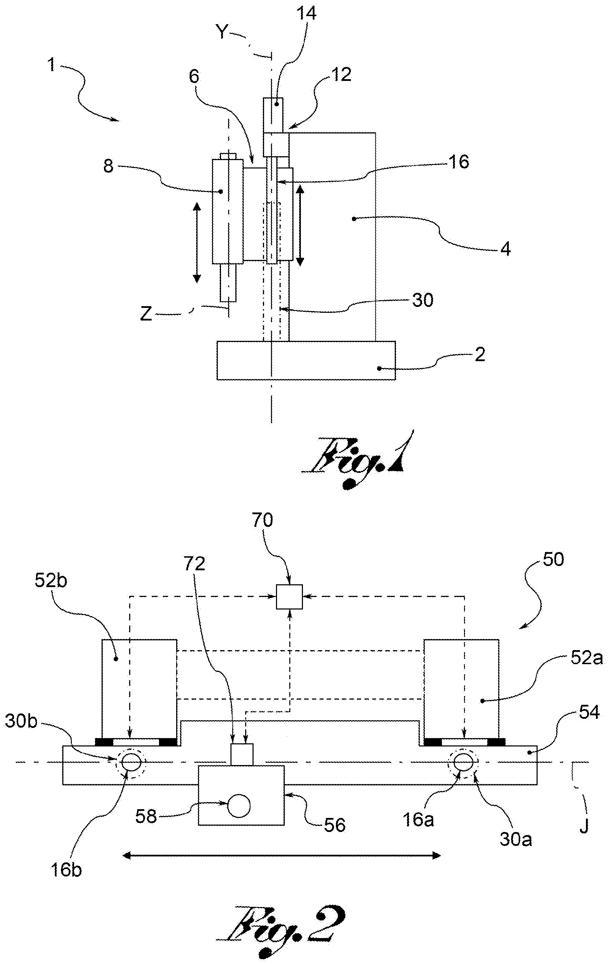

According to one embodiment variant of the invention (figure 1), a machine tool is a machine with a vertical axis, for example a milling machine 1, comprising a base 2 resting on the foundations, a vertical upright 4 resting on the base 2 and extending along a vertical axis, and a working head 6, supported by the upright 4 and translatable upon command along a movement axis Y.

In addition, the machine tool 1 comprises a spindle 8 supported by the head 6, having a working axis Z, preferably translatable upon command along said working axis Z.

The machine tool 1 comprises drive means 12, suitable for being operated to move the head 6 along said movement axis Y.

The drive means 12 comprise, according to a preferred embodiment, an electric motor 14, for example supported by the upright 4 at the top thereof, and a screw-nut system 16 which comprises, for example, a ball bearing screw.

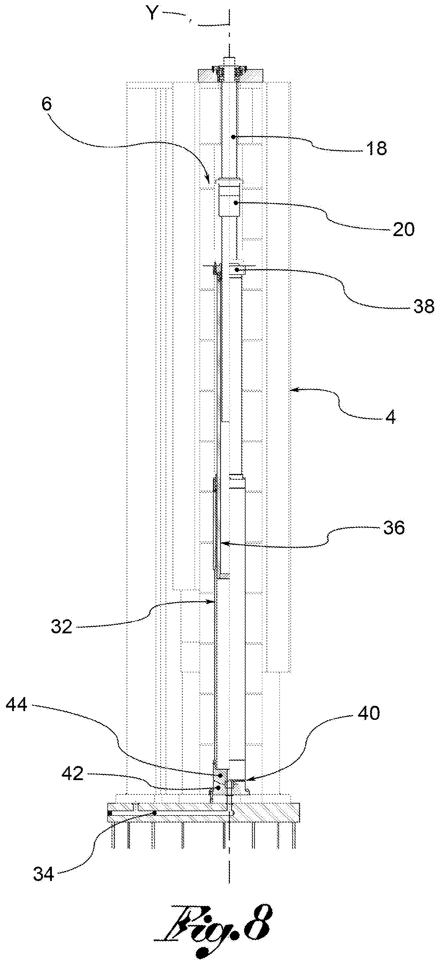

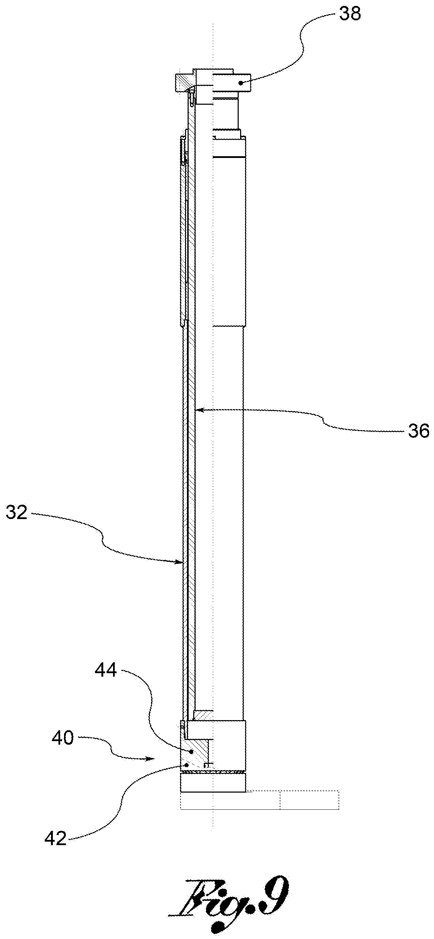

Preferably, (figures 8 and 9), the screw-nut system 16 comprises a screw 18 connected to the motor, positioned along said movement axis Y, and a female screw 20, for example a cross-head screw, which the screw 18 engages in; the female screw 20 is attached to the head 6.

The controlled rotation of the screw, imposed by the motor, in one direction of rotation or the other, causes the lowering or raising of the head 6.

The machine tool 1 comprises a balancing device 30, preferably supported by the base 2 connected to the head 6 and suitable to push said head 6 to counter the weight of the head and of the devices supported thereby. The balancing device is extensible, to absorb the movement of the head 6 along the movement axis Y.

The balancing device 30 preferably comprises (figures 8 and 9), a cylinder 32 extending along said movement axis Y resting on the base 2, suitable to be driven hydraulically by means of fluid supply ducts 34, for example made in the base 2.

In addition, the balancing device 30 comprises a piston 36, engaged so as to sealingly slide in the cylinder 32, extending along said movement axis Y.

The piston 36 is connected to the cross-member 6. For example, said balancing device 30 comprises an attachment flange 38, attached to the cross-member 6 and to the piston 36.

Preferably, the screw 18 is aligned with the piston 36, and in particular the screw 18 is coaxial to said piston 36 and aligned along said movement axis Y. Advantageously, this prevents the formation of tipping or unbalance torques due to the action of the piston and to the reaction of the screw on the cross member.

Preferably, the piston 36 is internally hollow, so as to receive at least a section of the screw 18; preferably, moreover, the attachment flange 38 is also crossed by the screw 18.

Preferably, moreover, the balancing device 30 comprises adjustment means suitable to allow a slight misalignment of the cylinder axis 32 with the movement axis Y.

For example, said adjustment means comprise a spherical joint 40 by means of which the cylinder 32 rests on the base 2.

For example, said spherical joint 40 comprises a support flange 42, attached to the base 2, having a semi-spherical seat, and a support element 44, attached to the end of the cylinder 32, having a semi-spherical work surface, resting in the semi-spherical seat of the support flange 42.

Preferably, the fluid supply duct 34 crosses the support flange 42 and the support element 44 to supply the pressurised fluid to the inside of the cylinder 32.

According to one embodiment variant of the present invention, the machine tool is a gantry machine 50, for example a vertical axis milling machine (figure 2).

The machine 50 comprises two uprights 52a, 52b, extending along respective vertical axes, distanced along a horizontal axis J.

The machine 50 comprises a cross member 54, extending along said horizontal axis J and supported by the two uprights 52a, 52b. The cross member is vertically translatable upon command along a movement axis Y.

In addition, the machine 50 comprises a working head 56, supported by the upright 54 and translatable upon command along said horizontal axis J.

The machine 50 further comprises a spindle 58, supported by the head 56, having a working axis Z and preferably translatable along said working axis Z.

The machine 50 is provided with two screw-nut systems 16a, 16b for the movement of the cross member 54 along the movement axis Y, distanced along said horizontal axis J.

In addition, the machine 50 comprises two balancing devices 30a, 30b, each engaged with the respective screw-nut system 16a, 16b.

Preferably, moreover, the machine tool 50 comprises a control device to control the balancing devices 30a, 30b.

The control device comprises a control unit 70 suitable to control the two balancing devices 30a, 30b and a sensor 72 suitable to detect the position of the head 56 along said horizontal axis J and to transmit a position signal to said control unit 70 to modulate the activation of the balancing devices 30a, 30b depending on the position of the head 56.

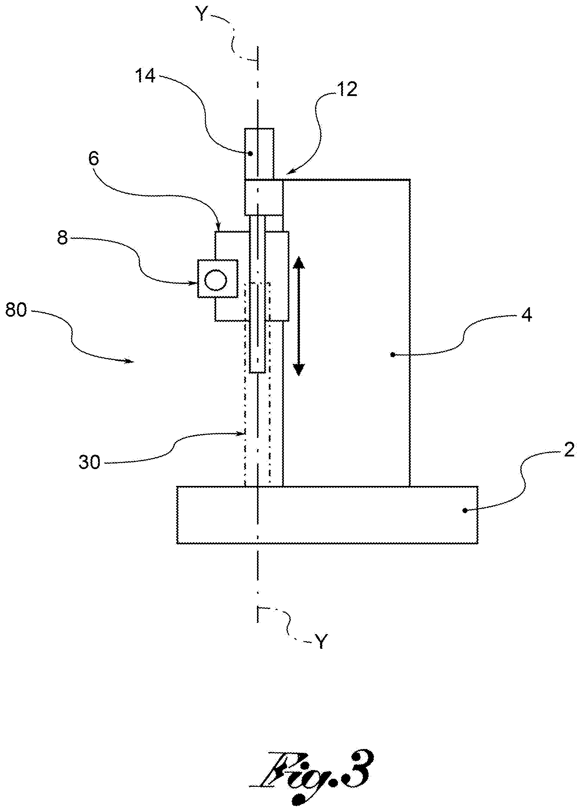

According to yet a further embodiment variant of the invention, the machine tool is a horizontal axis machine 80, for example a horizontal axis boring machine (figure 3).

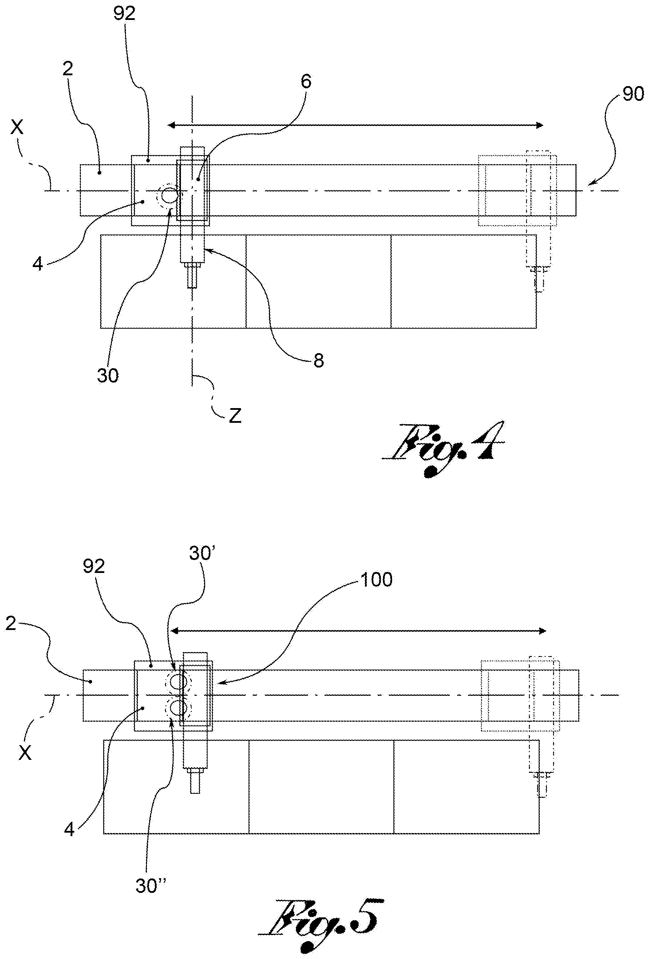

According to a further embodiment variant the machine tool is a machine tool with a mobile upright 90 ( figures 4 and 5), for example having a horizontal axis, wherein the base 2 extends along a longitudinal translation axis X, for example perpendicular to the working axis Z.

The machine 90 comprises a carriage 92 supported by the base 2 and translatable upon command along said longitudinal translation axis X, which the upright 4 is supported on.

In said embodiment, the balancing device 30 is supported by the carriage 92 and is thus translated together with the upright.

According to yet a further embodiment, a machine tool 100 provides for two or more balancing devices 30', 30" engaged with the same head 6, resting on the same fixed base (variant not shown) or on the translating carriage (figure 5).

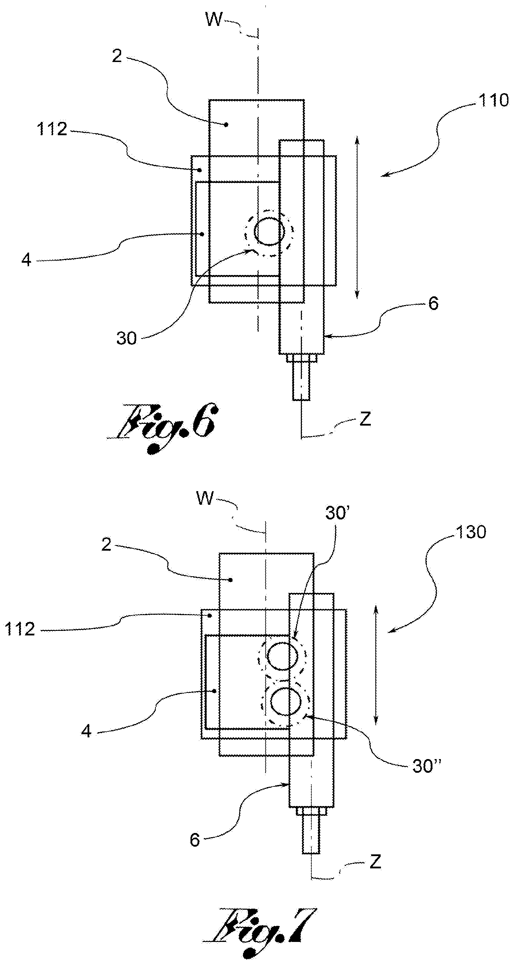

According to further embodiment variants, a machine tool is a machine tool with a mobile upright 110 (figures 6 and 7), for example having a horizontal axis, wherein the base 2 extends along a transversal translation axis W, for example parallel to the working axis Z.

The machine 110 comprises a carriage 112 supported by the base 2 and translatable upon command along said transversal translation axis W, which the upright 4 is supported on.

In said embodiment, the balancing device 30 is supported by the carriage 112 and is thus translated together with the upright 4.

According to yet a further embodiment, a machine tool 130 provides for two or more balancing devices 30', 30" engaged with the same head 6, resting on the same fixed base (variant not shown) or on the translating carriage (figure 7).

In the light of the description, the machine tools described above provide for a support structure, for example the head 6 or the cross member 54, translatable and supported by the upright 4 and bearing a spindle 8, 58 having a working axis Z, and drive means 12 engaged with the support structure 6, 54 to move it upon command along the movement axis Y. Said machine tools further provide for at least one balancing device extensible along said movement axis Y to act so as to push against the support structure and counter the effect of the weight of said support structure and of the components supported thereby.

In addition, the balancing device is supported by a fixed support relative to the support structure it operates on; said fixed support is the base 2 or the translatable carriage 92, 112.

Innovatively, the machine tool according to the present invention makes it possible to balance the weight of the cross member or of the working head and of the components supported thereby, with a system which is particularly efficient and simple to make.

It is clear that a person skilled in the art may make modifications to the machine tools described above so as to satisfy contingent requirements, all contained within the scope of protection as defined by the following claims.

## Claims

1. Machine tool (1,50,80,90,100,110,130) comprising a vertical upright (4), a translatable support structure (6,54) supported by the upright (4) and bearing a spindle (8,58) having a working axis (Z), drive means (12) engaged with the support structure (6, 54) to move it upon command along a movement axis (Y) and at least one balancing device (30, 30a, 30b, 30' ,30") extensible along said movement axis (Y) to act so as to push against the support structure and to counter the effect of the weight of said support structure and of the components supported thereby,
wherein the drive means (12) comprise an electric motor (14) and a screw-nut system (16), wherein the screw (18) is connected to the motor (14) and the nut is connected to the support structure (6,54),
wherein the balancing device comprises a cylinder (32), supported by a fixed support relative to the support structure (6, 54) and a piston (36) sealingly slidable in the cylinder (32) and connected to the support structure (6,54), **characterised in that** the cylinder (32) is a hydraulic cylinder and the screw (18) and the piston (36) extend along said movement axis (Y) and are coaxial with each other.

2. Machine tool according to claim 1, wherein the screw-nut system is a recirculating ball system.

3. Machine tool according to claim 1 or 2, comprising adjustment means suitable to allow a slight misalignment of the cylinder axis (32) with the movement axis (Y).

4. Machine tool according to claim 3, wherein the adjustment means comprise a spherical joint (40) by means of which the cylinder (32) rests on the fixed support.

5. Machine tool according to any of the previous claims, comprising two uprights (52a, 52b) distanced along a horizontal axis (J), wherein the support structure is a cross-member (54) extending along said horizontal axis (J) and bearing a head (56) translatable upon command along said horizontal axis (J) and in which at least two balancing devices (30a, 30b) are provided, each associated to the respective upright.

6. Machine tool according to claim 5, comprising a control device suitable for modulating the action of the balancing devices on the support structure depending on the position of the head (56) along said horizontal axis (J).

7. Machine tool according to any of the previous claims, wherein the upright (4) is translatable upon command along a longitudinal (X) or transversal (W) translation axis.

8. Machine according to claim 7, comprising a carriage (92, 112) translatable upon command, which the upright (4) is supported on, said balancing device being supported by said carriage (92,112).

9. Machine tool according to any of the previous claims, in which two or more balancing devices for each upright are provided, operating on the same support structure.

## Patentansprüche

1. Werkzeugmaschine (1, 50, 80, 90, 100, 110, 130), das umfasst: einen vertikalen Pfosten (4), eine verschiebbare Haltestruktur (6, 54), die von dem Pfosten (4) gehalten wird und eine Spindel (8, 58) mit einer Arbeitsachse (Z) trägt, Antriebsmittel (12), die mit der Haltestruktur (6, 54) eingreifen, um sie auf Befehl entlang einer Bewegungsachse (Y) zu bewegen, und wenigstens eine Gewichtsausgleichsvorrichtung (30, 30a, 30b, 30', 30"), die entlang der Bewegungsachse (Y) verlängerbar ist, um derart zu wirken, dass sie gegen die Haltestruktur drückt und der Wirkung des Gewichts der Haltestruktur und der von dieser gehaltenen Komponenten entgegenwirkt,
wobei die Antriebsmittel (12) einen Elektromotor (14) und ein Schraubenmuttersystem (16) umfassen,
wobei die Schraube (18) mit dem Motor (14) verbunden ist und die Mutter mit der Haltestruktur (6, 54) verbunden ist, wobei die Gewichtsausgleichsvorrichtung einen Zylinder (32), der von einem festen Halter relativ zu der Haltestruktur (6, 54) gehalten wird, und einen Kolben (36), der abgedichtet in dem Zylinder (32) verschiebbar und mit der Haltestruktur (6, 54) verbunden ist, umfasst,
**dadurch gekennzeichnet, dass** der Zylinder (32) ein Hydraulikzylinder ist und die Schraube (18) und der Kolben (36) sich entlang der Bewegungsachse (Y) erstrecken und koaxial miteinander sind.

2. Werkzeugmaschine nach Anspruch 1, wobei das Schraubenmuttersystem ein Kugelführungssystem ist.

3. Werkzeugmaschine nach Anspruch 1 oder 2, das Einstellmittel umfasst, die geeignet sind, um eine geringfügige Fehlausrichtung der Zylinderachse (32) mit der Bewegungsachse (Y) zuzulassen.

4. Werkzeugmaschine nach Anspruch 3, wobei die Einstellmittel ein Kugelgelenk (40) umfassen, mit dessen Hilfe der Zylinder (32) auf dem festen Halter ruht.

5. Werkzeugmaschine nach einem der vorhergehenden Ansprüche, die zwei Pfosten (52a, 52b) umfasst, die entlang einer Horizontalachse (J) beabstandet sind, wobei die Haltestruktur ein Querbalken (54) ist, der sich entlang der Horizontalachse (J) erstreckt und einen Kopf (56) trägt, der auf Befehl entlang der Horizontalachse (J) verschiebbar ist, und wobei wenigstens zwei Gewichtsausgleichsvorrichtungen (30a, 30b) bereitgestellt sind, von denen jede mit dem jeweiligen Pfosten verbunden ist.

6. Werkzeugmaschine nach Anspruch 5, die eine Steuervorrichtung zum Anpassen der Wirkung der Gewichtsausgleichsvorrichtungen auf der Haltestruktur in Abhängigkeit von der Position des Kopfs (56) entlang der Horizontalachse (J) umfasst.

7. Werkzeugmaschine nach einem der vorhergehenden Ansprüche, wobei der Pfosten (4) auf Befehl entlang einer Längs- (X) oder Quer- (W) Verschiebungsachse verschiebbar ist.

8. Maschine nach Anspruch 7, die einen Wagen (91, 112) umfasst, der auf Befehl verschiebbar ist, auf welchem der Pfosten (4) gehalten wird, wobei die Gewichtsausgleichsvorrichtung von dem Wagen (92, 112) gehalten wird.

9. Werkzeugmaschine nach einem der vorhergehenden Ansprüche, wobei zwei oder mehr Gewichtsausgleichsvorrichtungen für jeden Pfosten bereitgestellt sind, die auf der gleichen Haltestruktur arbeiten.

## Revendications

1. Machine-outil (1, 50, 80, 90, 100, 110, 130) comprenant un montant vertical (4), une structure de support déplaçable en translation (6, 54) supportée par le montant (4) et portant une broche (8, 58) ayant un axe de travail (Z), un moyen d'entraînement (12) engagé avec la structure de support (6, 54) pour la déplacer sur commande le long d'un axe de déplacement (Y) et au moins un dispositif d'équilibrage (30, 30a, 30b, 30', 30") extensible le long dudit axe de déplacement (Y) pour agir de manière à pousser contre la structure de support et à contrer l'effet du poids de ladite structure de support et des composants supportés par celle-ci, dans laquelle le moyen d'entraînement (12) comprend un moteur électrique (14) et un système vis-écrou (16),
dans laquelle la vis (18) est connectée au moteur (14) et l'écrou est connecté à la structure de support (6, 54),
dans laquelle le dispositif d'équilibrage comprend un cylindre (32), supporté par un support fixe par rapport à la structure de support (6, 54) et un piston (36) pouvant coulisser de manière étanche dans le cylindre (32) et connecté à la structure de support (6, 54),
**caractérisée en ce que** le cylindre (32) est un cylindre hydraulique et la vis (18) et le piston (36) s'étendent le long dudit axe de déplacement (Y) et sont coaxiaux l'un avec l'autre.

2. Machine-outil selon la revendication 1, dans laquelle le système vis-écrou est un système à recirculation de billes.

3. Machine-outil selon la revendication 1 ou 2, comprenant un moyen d'ajustement approprié pour autoriser un léger désalignement de l'axe de cylindre (32) avec l'axe de déplacement (Y).

4. Machine-outil selon la revendication 3, dans laquelle le moyen d'ajustement comprend un joint sphérique (40) à l'aide de laquelle le cylindre (32) repose sur le support fixe.

5. Machine-outil selon l'une quelconque des revendications précédentes, comprenant deux montants (52a, 52b) écartés le long d'un axe horizontal (J), dans laquelle la structure de support est une traverse (54) s'étendant le long dudit axe horizontal (J) et portant une tête (56) pouvant être déplacée en translation sur commande le long dudit axe horizontal (J) et dans laquelle au moins deux dispositifs d'équilibrage (30a, 30b) sont disposés, chacun associé au montant respectif.

6. Machine-outil selon la revendication 5, comprenant un dispositif de commande approprié pour moduler l'action des dispositifs d'équilibrage sur la structure de support en fonction de la position de la tête (56) le long dudit axe horizontal (J).

7. Machine-outil selon l'une quelconque des revendications précédentes, dans laquelle le montant (4) peut être déplacé en translation sur commande le long d'un axe de translation longitudinal (X) ou transversal (W).

8. Machine-outil selon la revendication 7, comprenant un chariot (92, 112) pouvant être déplacé en translation sur commande, sur lequel est supporté le montant (4), ledit dispositif d'équilibrage étant supporté par ledit chariot (92, 112).

9. Machine-outil selon l'une quelconque des revendications précédentes, dans laquelle sont disposés deux ou plus dispositifs d'équilibrage pour chaque montant, fonctionnant sur la même structure de support.
